(19)

Europäisches
Patentamt
European
Patent Office
Office européen
des brevets

(11)  EP 4 245 699 A1

(12)  EUROPEAN PATENT APPLICATION

(43) Date of publication:
20.09.2023  Bulletin 2023/38

(51) International Patent Classification (IPC):
B65G 27/28 (2006.01)     B65G 27/32 (2006.01)

(21) Application number: 23157946.7

(22) Date of filing: 22.02.2023

(52) Cooperative Patent Classification (CPC):
B65G 27/32; B65G 27/28

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 10.03.2022  PL 44060422

(71) Applicant: Akademia Gorniczo-Hutnicza im.
Stanislawa
Staszica w Krakowie
30-059 Krakow (PL)

(72) Inventors:
• CIEPLOK, Grzegorz
41-400 Myslowice, ul. Graniczna 27A (PL)
• BEDNARSKI, Lukasz
25-432 Kielce, ul. Jezioranskiego 83/12 (PL)
• CZUBAK, Piotr
30-231 Krakow, ul.Starowolska 25b (PL)

(74) Representative: Kowal, Elzbieta et al
Polservice
Kancelaria Rzecznikow
Patentowych sp. z o.o.
Bluszczanska 73
00-712 Warszawa (PL)

(54)  **ANTI-RESONANCE REVERSIBLE VIBRATING  CONVEYOR**

(57)     The object matter of the invention is an anti-resonant reversible vibrating conveyor, comprising a body in the form of a rigid spatial frame structure, supported symmetrically on resilient supports on the ground and a trough of self-supporting structure, constituting at the same time the mass of the dynamic eliminator, situated inside the body with a clearance enabling its working vibrating motion and connected to it symmetrically by means of resilient elements, as well as two vibrating drive units rigidly connected to the body, in such a way that the direction of action of the forcing resultant force, acts in the longitudinal plane of symmetry of the trough and passes through the centre of mass of the trough and the centre of mass of the conveyor body, which centres of gravity coincide, the vibration drive units being connected to the power source via a control device (2), which is a two-channel tuneable generator with signal amplifier, and the vibration drive (4) are electromagnetic actuators, and furthermore the resilient elements (6) having equal stiffness in the longitudinal directions $k_{sy}$ and transverse directions ksx.

Fig. 1

EP 4 245 699 A1

## Description

The subject matter of the invention relates to an anti-resonant reversible vibratory conveyor for use especially in industrial fields where transport of raw materials, semi-finished or finished products is carried out and it is necessary to stop or change the direction of transport.

Reversible vibratory conveyors using the Frahm dynamic eliminator solution are known, e.g. from US patent description US989958A. Also known are anti-resonant, vibratory conveyors using the idea of a Frahm dynamic eliminator. For example, from US patent description US6161680A, there is known a vibrating conveyor with a trough as an eliminator mass, supported on the body by resilient elements, which provides a system of oblique spring bars while the body is supported on the ground by resilient elements, which is a system of helical springs, acting as vibration isolating elements. Forcing is carried out by a system of counter-rotating vibrators connected to the body. The vibration excitation of the body, excites the working vibration of the trough, and the amplitude of the vibration of the trough automatically settles at such a level and in such a phase that the force exerted by the vibration of the trough in the spring bars balances the vibrators reaction and practically stops the vibrating movement of the body, which extinguishes the forces transmitted to the ground through the coil springs. A prerequisite for correct operation of these machines is that the natural frequency $f_r$ of the trough with mass $m_r$, supported on a system of springs with a total spring rate $k_r$, to be equal to the operating frequency of the vibrators $f_w = f_r$, where:

$$f_r = \frac{1}{2\pi}\sqrt{\frac{k_r}{m_r}}$$

A similar technical solution is presented in US patent description US6659267B2, where, in addition, the direction of the resultant force passes through the centre of a mass of the trough and the centre of a mass of the conveyor body.

It is also known from the Polish patent application PL432370A1 a solution disclosing a reversible vibrating conveyor controlled by a control device constituted by inverters, enabling control of the phase angle of the vibrators setting.

From the Polish patent description PL239290B1 there known a vibrating conveyor, comprising a trough open at least at one end, position, and a vibrating drive in the form of a pair of self-synchronising counter-rotating electro-vibrators suspended from the trough of the conveyor at such an angle that their resultant force passes through the centre of gravity of the trough lying on a vertical plane drawn through the longitudinal axis of the trough, and the axes of rotation of the electro-vibrators are perpendicular to this plane, characterised in that, by means of an additional elastic suspension, the mass of the eliminator is attached to the trough in such a way that its centre of gravity coincides with the centre of gravity of the trough and, moreover, the mass of the eliminator has limited degrees of freedom to one translational in the direction in line with the direction of the resultant force of the electro-vibrators, which are connected via known transmission means with electric motors equipped with a rotation speed control device, which may be inverters. In one embodiment of the invention, the elastic support of the trough may be constituted by four helical springs arranged at the corners of the trough, with additional elastic suspension represented a device of rotation speed control are helical springs with axes parallel to the direction of the resultant force of the electro-vibrators.

Another Polish application description PL434041A1 discloses an anti-resonant vibrating conveyor comprising a body in the form of a rigid spatial frame structure, supported on resilient vibration isolating elements, and a trough, which is also the mass of the dynamic eliminator, connected to the body via resilient elements, which are diagonal spring bars to the longitudinal direction of the trough, and also including a vibration drive that an assembly of at least two vibrators rigidly connected to the body in such a way that the direction of their resultant force passes through the centre of mass of the trough and the centre of mass of the conveyor body. The centre of mass of the trough and the centre of mass of the body with the vibrators and the spring bars coincide each other, and furthermore the trough is suspended inside the body on the spring bar assemblies.

The purpose of the invention is to develop the anti-resonant reversible vibratory conveyor that allows to stop operation of the system and to stop transferring of the mass in both directions without transmission significant dynamic forces and moments to the ground.

The essence of the anti-resonant reversible vibratory conveyor comprises a body in the form of a rigid spatial frame structure supported symmetrically on resilient supports on the ground, and a trough of self-supporting structure, which is also the mass of the dynamic eliminator, located inside the body with a clearance allowing its working vibratory movement and symmetrically connected to it by means of resilient elements, and also comprising two vibratory drive units rigidly connected to the body, attached to the power source through a control device, in such a way that the direction of action of their forcing resultant force, acts in the plane of symmetry of the trough and passes through the centre of mass of the trough and the centre of mass of the conveyor body, which centres of gravity coincide with each other, is that the control device is a two-channel tuneable generator with a signal amplifier and the vibration drive are electromagnetic actuators and, moreover, the resilient elements have equal stiffness in the longitudinal directions $k_{sy}$ and transverse directions $k_{sx}$.

It is advantageous when the resilient supports are helical springs. In order to control the dosage of the material to be transported, it is also advantageous when a balance is situated between the ground and the resilient supports.

The subject matter of the invention discloses in the embodiments is illustrated in the simplified drawing, in which fig. 1 shows the conveyor with the control system and dumping hopper at one end, fig. 2 shows examples of trough vibration characteristics diagrams, fig. 3 - a conveyor in a variant with a chute located in the middle, fig. 4 - with the balance between the elastic supports and the ground.

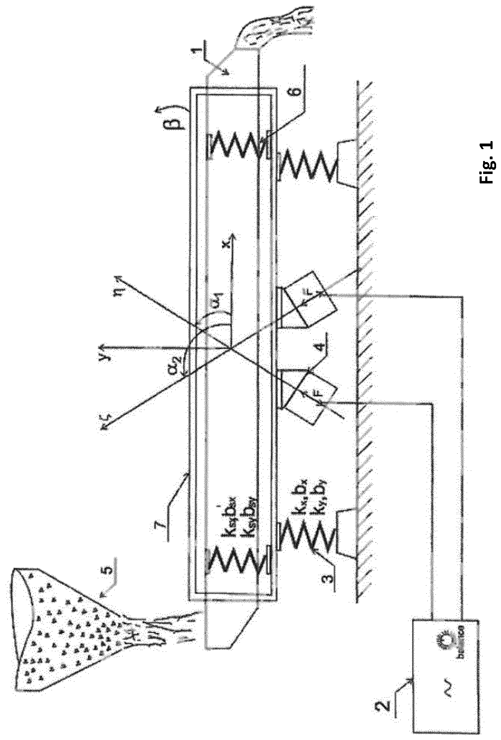

The anti-resonance reversible vibrating conveyor (fig. 1), has four resilient and symmetrically spaced out supports 3 attached to a body 7 of frame construction and a ground, which is not marked on the drawing. Inside the body 7, a trough 1 of self-supporting structure is situated. The trough 1 is supported inside the body 7 by four parallel resilient elements 6 with identical stiffness in the longitudinal direction $k_{sy}$ and transverse direction $k_{sx}$. From below, two vibration drive units 4 are attached to the body 7 from the bottom, so that their resultant force acts in the longitudinal plane of symmetry of the trough 1 and passes through the centre of mass of the trough and the centre of mass of the conveyor body. The vibratory drive units 4, are connected to the power source through a control device 2, being a two-channel tuneable generator with a signal amplifier.

The vibration drive units 4, which are electromagnetic actuators, attached to the body 7 produce a harmonic force F of frequency $\omega_w$ along axes ($\eta$ and $\xi$) inclined from the horizontal at angles $\alpha_1$ and $\alpha_2$ respectively. The suspension of the trough 1 inside the body 7 has very precisely designated stiffness on the $k_{sx}$ and $k_{sy}$ directions, which are equal to each other. The coil springs were selected in order to have the same stiffness in compression and shear. This causes that, irrespective of the vibration direction $\beta$, trough 1 of mass $m_r$ is the dynamic eliminator of body 7, assuming that the forcing frequency $\omega_w$ will satisfy the relation:

$$\omega_w = \sqrt{\frac{k_{sx}}{m_r}} = \sqrt{\frac{k_{sy}}{m_r}}$$

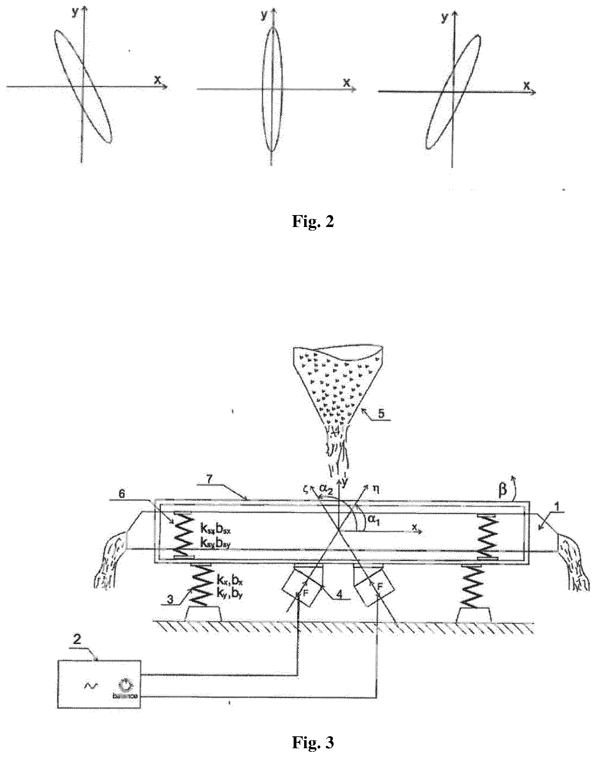

The conveyor control is achieved by the amplitude of the excitation force of the electromagnetic actuators 4. As each is controlled separately, it is possible to obtain various oscillation characteristics of the trough, examples of which are shown in fig.2.

In another embodiment of the invention (fig. 3), the conveyor designed for two-directional transport has a dumping hopper 5 located in the centre of the trough.

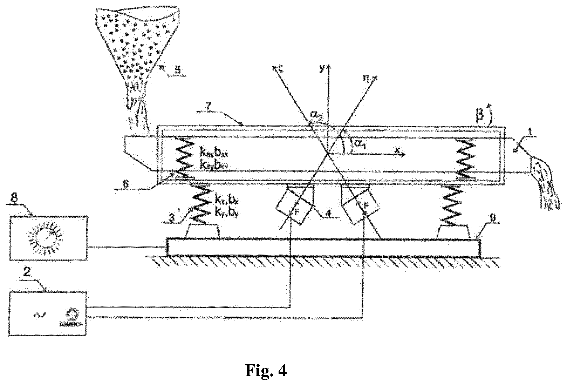

In yet another embodiment of the invention, with measurement of the mass of the transported feed (fig. 4), there is a balance 8 between the resilient supports 3 and the ground.

**Claims**

1. An anti-resonant reversible vibratory conveyor, comprising a body in the form of a rigid spatial frame structure supported symmetrically on resilient supports on the ground, and a trough of self-supporting structure, which is also the mass of the dynamic eliminator, located inside the body with a clearance allowing its working vibratory movement and connected to it symmetrically by means of resilient elements, and two vibratory drive units rigidly connected to the body, in such a way that the direction of action of their forcing resultant force, acts in the longitudinal plane of symmetry of the trough and passes through the centre of mass of the trough and the centre of mass of the conveyor body, which centres of gravity coincide with each other, wherein the vibration drive units being connected to the power source via a control device, **characterised in that** the control device (2) is a two-channel tuneable generator with a signal amplifier and the vibration drive (4) are electromagnetic actuators and, furthermore, the resilient elements (6) have equal stiffness in the longitudinal $k_{sy}$ and transverse $k_{sx}$ directions.

2. The anti-resonant reversible vibratory conveyor according to claim. 1, **characterised in that** the resilient supports (3) are helical springs.

3. The anti-resonance reversible conveyor, according to claim 1, **characterised in that** the body (7) is symmetrically supported on the ground via a balance (8).

Fig. 1

EP 4 245 699 A1

Fig. 2

Fig. 3

**Fig. 4**

Europäisches
Patentamt

European
Patent Office

Office européen
des brevets

# EUROPEAN SEARCH REPORT

Application Number

EP 23 15 7946

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AT 211 222 B (RUZICKA JAROSLAV ING) 26 September 1960 (1960-09-26) | 1,2 | INV. B65G27/28 B65G27/32 |
| Y | * figures 1,2 * <br> * page 1, lines 19-25 * | 3 | |
| A | US 5 178 259 A (MUSSCHOOT ALBERT [US]) 12 January 1993 (1993-01-12) <br> * figure 1 * <br> * column 3, lines 27-56 * | 1-3 | |
| A | JP H01 303218 A (KITADA SUKEELE KK) 7 December 1989 (1989-12-07) <br> * figure 1 * | 1-3 | |
| A | US 6 029 796 A (MUSSCHOOT ALBERT [US]) 29 February 2000 (2000-02-29) <br> * figure 1 * <br> * column 5, lines 12-20 * | 1-3 | |
| A | US 3 032 175 A (THOMAS JOHN W) 1 May 1962 (1962-05-01) <br> * figures 1,2 * | 1-3 | TECHNICAL FIELDS SEARCHED (IPC) B65G |
| A | US 4 272 366 A (DEAN ARTHUR L ET AL) 9 June 1981 (1981-06-09) <br> * figure 1 * | 1-3 | |
| Y | DE 10 2020 118707 B3 (CITEX HOLDING GMBH [DE]) 8 July 2021 (2021-07-08) <br> * figures 1,2 * <br> * paragraph [0045] * | 3 | |
| A | US 4 218 929 A (SPURLIN WILLIAM V [US]) 26 August 1980 (1980-08-26) <br> * figure 6 * | 1-3 | |

The present search report has been drawn up for all claims

| Place of search | Date of completion of the search | Examiner |
|---|---|---|
| The Hague | 21 July 2023 | Moreno Rey, Marcos |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 245 699 A1

## ANNEX TO THE EUROPEAN SEARCH REPORT
## ON EUROPEAN PATENT APPLICATION NO.

EP 23 15 7946

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2023

| Patent document cited in search report | | Publication date | Patent family member(s) | | Publication date |
|---|---|---|---|---|---|
| AT 211222 | B | 26-09-1960 | NONE | | |
| US 5178259 | A | 12-01-1993 | CA | 2066060 A1 | 31-10-1992 |
| | | | DE | 69213081 T2 | 27-03-1997 |
| | | | EP | 0511757 A2 | 04-11-1992 |
| | | | ES | 2093777 T3 | 01-01-1997 |
| | | | JP | 3291023 B2 | 10-06-2002 |
| | | | JP | H05278831 A | 26-10-1993 |
| | | | US | 5178259 A | 12-01-1993 |
| JP H01303218 | A | 07-12-1989 | NONE | | |
| US 6029796 | A | 29-02-2000 | NONE | | |
| US 3032175 | A | 01-05-1962 | NONE | | |
| US 4272366 | A | 09-06-1981 | AU | 6112480 A | 19-02-1981 |
| | | | BR | 8005189 A | 04-03-1981 |
| | | | CA | 1131464 A | 14-09-1982 |
| | | | DE | 3030639 A1 | 26-02-1981 |
| | | | ES | 8104123 A1 | 01-04-1981 |
| | | | FR | 2462943 A1 | 20-02-1981 |
| | | | GB | 2060813 A | 07-05-1981 |
| | | | JP | S605488 B2 | 12-02-1985 |
| | | | JP | S5633309 A | 03-04-1981 |
| | | | KR | 830003251 A | 18-06-1983 |
| | | | US | 4272366 A | 09-06-1981 |
| | | | ZA | 804902 B | 26-08-1981 |
| DE 102020118707 | B3 | 08-07-2021 | DE | 102020118707 B3 | 08-07-2021 |
| | | | EP | 3939915 A1 | 19-01-2022 |
| | | | US | 2022017312 A1 | 20-01-2022 |
| US 4218929 | A | 26-08-1980 | CA | 1092857 A | 06-01-1981 |
| | | | EP | 0002838 A1 | 11-07-1979 |
| | | | ES | 476451 A1 | 16-11-1979 |
| | | | JP | S54500051 A | 01-11-1979 |
| | | | US | 4218929 A | 26-08-1980 |
| | | | WO | 7900453 A1 | 26-07-1979 |

For more details about this annex : see Official Journal of the European Patent Office, No. 12/82

8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 989958 A
- US 6161680 A
- US 6659267 B2

- PL 432370 A1
- PL 239290 B1
- PL 434041 A1